# EUROPEAN PATENT SPECIFICATION

(11) **EP 3 840 185 B1**
(45) Date of publication and mention of the grant of the patent: **09.10.2024**
(21) Application number: 19216436.6
(22) Date of filing: 16.12.2019
(51) Int. Cl.: H02K 3/34, H02K 3/52

(54) **STATOR FOR ELECTRIC MOTORS COMPRISING PREFORMED COIL ASSEMBLIES MOUNTED THEREON**
STATOR FÜR ELEKTROMOTOREN MIT DARAUF ANGEBRACHTEN VORGEFORMTEN SPULENANORDNUNGEN
STATOR POUR MOTEURS ÉLECTRIQUES COMPRENANT DES ENSEMBLES DE BOBINE PRÉFORMÉS MONTÉS SUR LE STATOR

(43) Date of publication of application: 23.06.2021
(73) Proprietor: ETEL S.A., 2112 Môtiers (CH)
(72) Inventor: Chechenev, Dmitry, 2000 Neuchâtel (CH); Le, Minh-Tâm, 2018 Couvet (CH); Pourchet, Johann, 25650 La Chaux (FR)
(74) Representative: P&TS SA (AG, Ltd.)

(56) References cited:
- EP-A1- 2 889 988
- DE-A1- 102017 216 084
- US-A1- 2015 239 334
- US-A1- 2016 118 853

## Description

### Field of the invention

The present invention relates to a stator for electric motors, including a plurality of preformed coil assemblies mounted on corresponding teeth of the stator. The invention also relates to a rotary electric motor comprising such stator as well as a method for assembling a stator of a rotary electric motor.

### Background of the invention

During the manufacturing process of stators for rotary electric motors, the various components of stators such as coils, coil support, cables and sensors, if needed, are assembled and all electrical connections are performed. The assembly is then potted in a specially adapted leak-tight enclosure, so-called potting mould, by injection of synthetic resin, such as epoxy, at ambient pressure or under vacuum.

Potting is an essential operation as it protects cabling, guarantees a minimum distance between conductive parts and human/machine in order to comply with CE standards, improves thermal dissipation performances and solidifies and fixes together all components of the stator, particularly the coils.

In some cases, however, in particular for motors designed for low ambient temperatures such as used in aircraft, potting cannot be used in the motor because cracks would appear after a few temperature cycles. In this case, other solutions to fix the coils to the stator have to be found.

Winding carriers are solutions to centre the coils on the teeth of the stator in order to provide electrical insulation, to guarantee minimum distances to respect CE standards and to help with orthocyclic winding of the coils.

Other solutions to centre and secure the coils on the teeth of the stator exist. US9455606, for example, discloses a winding carrier for a coil, that is configured to be mounted on a tooth of a stator for an electrical machine. The winding carrier is made of an electrically insulating material and comprises a winding section around which a coil is wound.

However, the above disclosure is silent on how winding carriers are reliably secured on the stator teeth.

US2015/239334 discloses an electrical machine comprising a rotator mounted inside a stator. The electrical machine comprises an anti-dust flange to protect the machine against particles of dust. The flange is designed to prevent dust from accessing the annular air gap space between the rotor and the stator. The stator is provided with pins which project axially from its lateral part. The pins are configured to co-operate with holes s which open out, and are provided in the flange.

DE10 2017 216084 discloses a wound stator comprising axially extending centering pins formed on the insulating laminate, which engage in corresponding centering receptacles in the indexing plate.

An aim of the present invention is therefore to provide a stator for electric motors, configured to obviate or at least mitigate the above disadvantages.

In particular, an aim of the present invention is to provide a stator for electric motors, whereby preformed coil assemblies are reliably secured to the stator teeth in an easy manner.

Another aim of the invention is to provide a stator for electric motors, which is easy to assemble and cost-effective to manufacture.

A further aim of the invention is to provide a method for securing each preformed coil assembly on the stator teeth.

### Brief summary of the invention

The invention is defined in the independent claims 1 and 8. Further embodiments of the invention are defined in the dependent claims 2 - 7.

These aims are achieved by a stator for electric motors, comprising
a core having an upper and a lower surface and comprising teeth forming slots therebetween,
a first and a second coil locking layer fixedly mounted on respective upper and lower surfaces of said core, and
a plurality of preformed coil assemblies mounted on respective tooth of said core. Each preformed coil assembly comprises a winding section comprising an elongated opening configured to be fitted around the corresponding tooth, and a first and a second winding carriers connected to respective opposite ends of the winding section. The first and second winding carriers of each of said plurality of preformed coil assemblies comprise each a projecting mating part while said first and second coil locking rings comprise each a corresponding plurality of mating openings of complementary shape inside which are fitted the projecting mating part of respective first and second winding carriers of one of said plurality of preformed coil assemblies.

The stator further comprises a first supporting layer mounted between the upper surface of the core and the first coil locking layer, and a second supporting layer mounted between the lower surface of the core and the second coil locking layer.

In an embodiment, each of the first and second winding carriers comprises a winding portion having a contacting surface resting against a corresponding surface of respective first and second supporting layers.

In an embodiment, each of the first and second winding carriers further comprises projecting walls extending on both sides of the contacting surface.

In an embodiment, the projecting mating part of the first and second winding carriers comprises a contacting surface resting on a lateral portion of respectively the first and second supporting layers.

In an embodiment, said projecting mating part of each of said first and second winding carriers is a T-shaped mating part fitted inside a corresponding T-shaped opening of a plurality of T-shaped openings arranged on said first and second coil locking layers.

In an embodiment, the core is a cylindrical core having teeth extending radially and inwardly from an inner surface of the cylindrical core. The first and second coil locking layers are annular coil locking layers fixedly mounted on respective upper and lower annular surfaces of said core.

Another aspect of the invention relates to an electric rotary motor comprising the stator as described above and a rotor rotatably mounted on said stator.

Another aspect of the invention relates to a method for assembling a stator of a rotary electric motor, comprising the step of:
- providing a cylindrical core having an upper and a lower annular surface and comprising teeth extending radially and inwardly from an inner surface of the cylindrical core, and forming slots therebetween,
- fixedly mounting a first supporting ring on the upper surface of the core and a second supporting ring on the lower surface of the core,
- providing a plurality of preformed coil assemblies comprising each a winding section having an elongated opening, and a first and a second winding carrier connected to respective opposite ends of the winding section, said first and second winding carriers comprising each a projecting mating part having a contacting surface,
- adjusting the elongated opening of the winding section of each preformed coil assembly around a corresponding tooth of the cylindrical core such that the contacting surface of the projecting mating part of the first winding carrier of each preformed coil assembly rests against the first supporting ring, while the contacting surface of the projecting mating part of the second winding carrier of each preformed coil assembly rests against the second supporting ring, and
- fixedly mounting a first coil locking ring against the first supporting ring and a second locking ring against the second supporting ring, wherein said first and second coil locking rings comprise each a corresponding plurality of openings of complementary mating shape, thereby surrounding each projecting mating part of respective first and second winding carriers of each of said plurality of preformed coil assemblies.

### Brief description of the drawings

The invention will be better understood with the aid of the description of several embodiments given by way of examples and illustrated by the figures, in which:
- Figure 1 shows a partial perspective view of the core of the stator during a first step of the assembly of the preformed coil assemblies according to an embodiment;
- Figure 2 shows a similar view of Figure 1 during a second step of the assembly of the preformed coil assemblies;
- Figure 3 shows a similar view of Figure 2 during a third step of the assembly of the preformed coil assemblies;
- Figure 4 shows a similar view of Figure 3 during a last step of the assembly of the preformed coil assemblies, whereby the preformed coil assemblies are permanently secured to the stator;
- Figure 5a shows perspective view of a winding carrier of either first and second winding carriers of a preformed coil assembly,
- Figure 5b shows a side view of the winding carrier of Figure 5a, and
- Figure 6 shows an image of a preformed coil assembly according to the prior art (this image is licensed under the Creative Commons Attribution-Share Alike 4.0 International license; skanda@chello.at).

### Detailed description of several embodiments of the invention

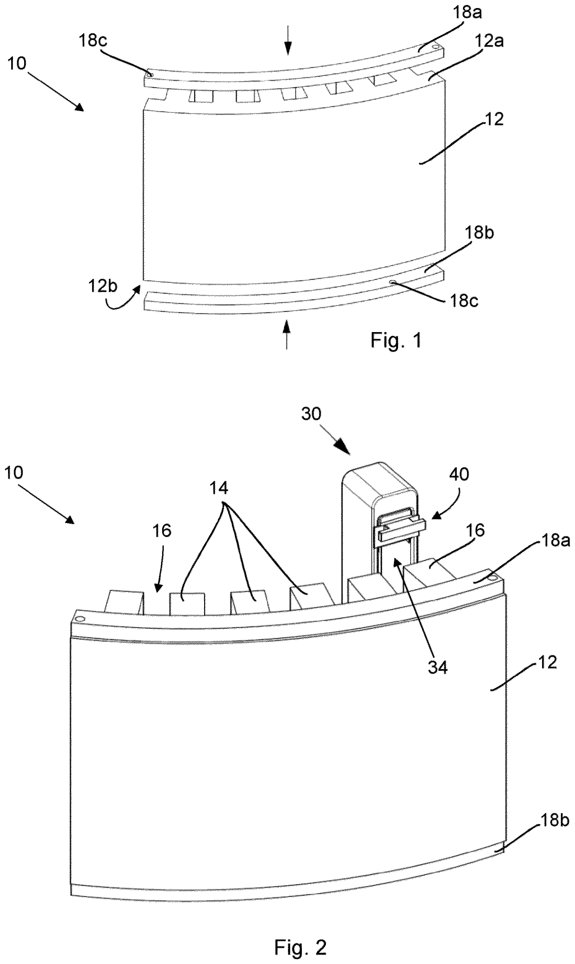

With reference to Figure 1, an upper and a lower supporting ring 18a, 18b made of an insulating material are fixedly mounted against respective upper and lower annular surfaces 12a, 12b of a cylindrical iron core 12 made of a laminated stack and comprising teeth 14 extending radially and inwardly from an inner surface of the iron core 12 to form slots 16 therebetween (Figure 2). These upper and lower supporting rings 18a, 18b may be fixed against their respective annular surface 12a, 12b for example by glue or an adhesive tape. This fixing can however be temporary, because these supporting rings 18a, 18b will be maintained in place by the preformed coil assemblies after insertion. The thickness of these supporting rings 18a, 18b are determined to prevent axial displacement of preformed coil assemblies 30 when there are inserted in their respective tooth 14 as shown in Figures 2 to 4.

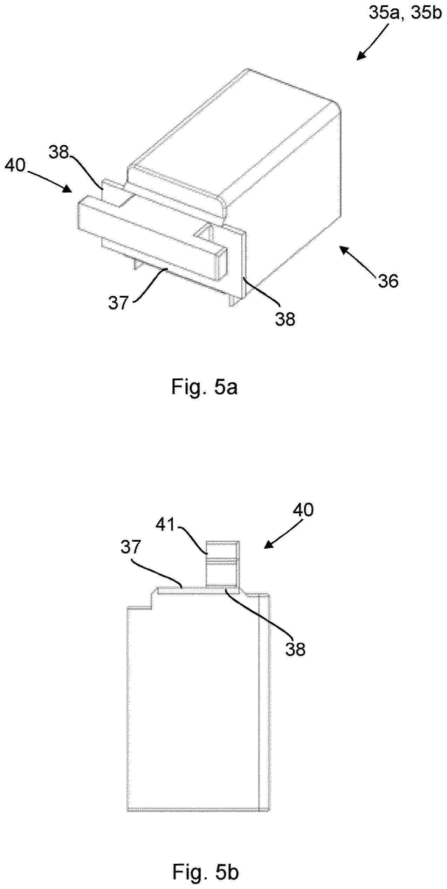

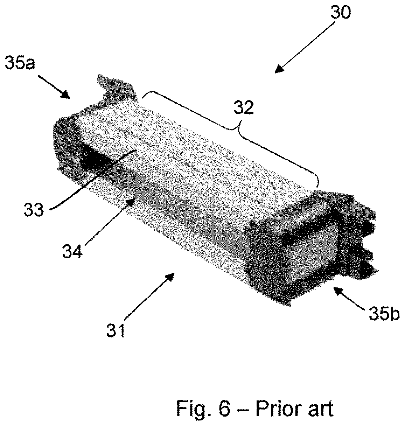

With reference to Figure 6, each preformed coil assembly 30 comprises an elongated opening 34 lined with insulation paper 33 and a first and a second winding carriers 35a, 35b (Figure 5a) mounted at the two ends of a preformed rectangular coil 31 to form a winding section 32. As particularly shown in Figures 5a and 5b, each of the first and second winding carriers 35a, 35b comprises a winding portion 36 and a projecting mating part 40 extending from one side of the winding portion 36. A contacting surface 37, adjacent the projecting mating part 40, extends across the width of each first and second winding carriers 35a, 35b of the preformed coil assembly 30. The projecting mating part may be for example a T-shaped mating part 40 having a contacting surface 41, as shown in Figure 5b, which is adapted to rest against a surface of the upper or lower supporting ring 18a, 18b. However, the projecting mating part 40 may have different shapes as it will be apparent from the description thereafter.

The first and second winding carriers 35a, 35b of each preformed coil assembly 30 further comprises projecting walls 38 extending on both sides of the contacting surface 37 in order to ensure an orthocyclic winding of the rectangular coil 31 and provide some additional electric insulation.

With reference to Figure 2, the preformed coil assemblies 30 are fitted around their respective tooth 14 such that the contacting surface 41 of the T-shaped mating part 40 extends radially on the corresponding supporting ring 18a, 18b while the contacting surface 37 rests against an inner portion of the supporting ring 18a, 18b. The rectangular opening 34 is preferably slightly larger than the dimensions of the tooth 14 to provide some mounting tolerance in the order of 100 microns in both orthogonal directions.

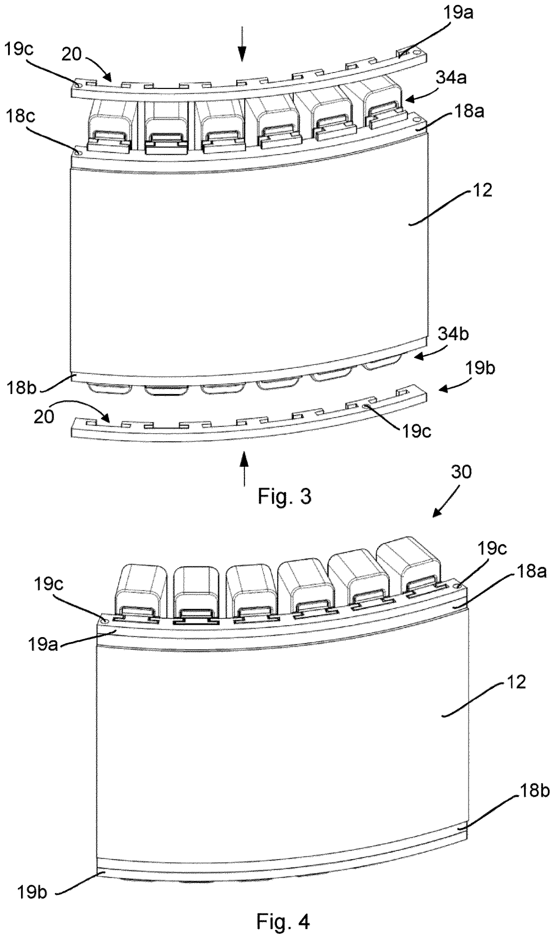

Once all preformed coil assemblies 30 are mounded on their respective tooth 14, an upper and lower coil locking rings 19a, 19b are fixed respectively against the upper and lower supporting rings 18a, 18b as shown in Figures 3 and 4. Each coil locking ring 19a, 19b comprises a plurality of mating through-opening 20 regularly spaced apart from each other around the ring. The mating through-opening 20 may have a corresponding T-shaped configuration to receive respective T-shaped mating part 40 of each winding carrier 35a, 35b of the preformed coil assembly 30. The mating through-opening may however have different shapes which are complementary to the shape of the projecting mating part 40 of the first and second winding carriers 35a, 35b of the preformed coil assembly 30.

As shown in particular in Figure 3, each of the upper and lower supporting rings 18a, 18b and each of the upper and lower coil locking rings 19a, 19b comprises non-threaded through-holes 18c, 19c for their permanent fixing to the upper and lower supporting rings 18a, 18b by means of self-tapping screws (not shown).

In a nutshell, when coil carriers 30 are fitted around their respective tooth 14, the coils are locked such that: i) their respective axial movements are prevented by the upper and lower supporting rings 18a, 18b, ii) their respective radial movements are prevented by the upper and lower coil locking rings 19a, 19b, and iii) their respective tangential movements are prevented by their respective radial tooth 14.

Although potting is not suitable for aircraft applications, the motor stator will undergo an impregnation process using varnish and curing that will glue all parts together and prevent long-term damage, for example due to vibration.

The stator 10 for electric motors as described herein is easy to assemble and cost-effective to produce as expensive components are not required. In particular, the supporting rings 18a, 18b and coil locking rings 19a, 19b can be cut out of raw material sheet, typically with water jet cutting. PA, LCP or other non-conductive materials can be used. Coil locking rings 19a, 19b can be segmented to decrease the amount of wasted material.

Assembling the stator requires the following steps:
S1: fixedly mounting the upper supporting ring 18a on the upper surface 12a of the core 12 and a lower supporting ring 18b on the lower surface 12b of the core by means for example of glue or an adhesive layer,
S2: adjusting the elongated opening 34 of the winding section 32 of each preformed coil assembly 30 around a corresponding tooth 14 of the cylindrical core 12 such that the contacting surface 41 of the projecting mating part 40 of the first winding carrier 35a of each preformed coil assembly 30 rests against the upper supporting ring 18a, while the contacting surface 41 of the projecting mating part 40 of the second winding carrier 35b of each preformed coil assembly 30 rests against the lower supporting ring 18b,
S3: fixedly mounting the upper coil locking ring 19a against the upper supporting ring 18a and the lower locking ring 19b against the lower supporting ring 18b by means for example of glue or an adhesive layer,
S4: ensuring permanent fixing of the supporting and coil locking rings against the upper and lower surfaces 12a, 12b of the core 12 through self-tapping screws, and
S5: optionally impregnating the stator winding with varnish and cure as required.

### Reference list

### Electric motor

Stator 10
   Cylindrical core 12
   Linear core (alternative)
   Upper annular surface 12a
   Lower annular surface 12b
   Radial teeth 14
   Slots 16

   Supporting layers
      Upper and lower supporting ring 18a, 18b
      Non-threaded holes 18c
   Coil locking layers
      Upper and lower coil locking rings 19a, 19b
      Non-threaded holes 19c
         Mating opening 20
         T-shaped opening
   Preformed coil assembly 30
      Preformed coil 31
      Winding section 32
      Insulating paper 33
      Elongated opening 34
      Coil end turns
      First and second winding carriers 35a, 35b
         Winding portion 36
         Contacting surface 37
         Lateral projecting wall 38
         Projecting mating part 40
            Contacting surface 41
            T-shaped projection
Rotor

## Claims

1. A stator (10) for electric motors, comprising
a core (12) having an upper and a lower surface (12a, 12b) and comprising teeth (14) forming slots (16) therebetween, and
a plurality of preformed coil assemblies (30) mounted on respective tooth (14) of said core (12), each preformed coil assembly (30) comprising a winding section (32) comprising an elongated opening (34) configured to be adjusted around the corresponding tooth (14), and a first and a second winding carrier (35a, 35b) connected to respective opposite ends of the winding section (32),
**characterized in that** the stator further comprises a first and a second coil locking layer (19a, 19b) fixedly mounted on respective upper and lower surfaces (12a, 12b) of said core (12), said first and second winding carriers (35a, 35b) of each of said plurality of preformed coil assemblies (30) comprising each a projecting mating part (40) while said first and second coil locking layers (19a, 19b) comprise each a corresponding plurality of mating openings (20) of complementary shape inside which are fitted the projecting mating part (40) of respective first and second winding carriers (35a, 35b) of one of said plurality of preformed coil assemblies (30), the stator (10) further comprising a first supporting layer (18a) mounted between the upper surface (12a) of the core (12) and the first coil locking layer (19a), and a second supporting layer (18b) mounted between the lower surface (12b) of the core (12) and the second coil locking layer (19b).

2. The stator (10) according to claim 1, wherein each of the first and second winding carriers (35a, 35b) comprises a winding portion (36) having a contacting surface (37) resting against a corresponding surface of respective first and second supporting layers (18a, 18b).

3. The stator (10) according to claim 2, wherein each of the first and second winding carriers (35a, 35b) further comprises projecting walls (38) extending on both sides of the contacting surface (37).

4. The stator (10) according to claim 2 or 3, wherein the projecting mating part (40) of the first and second winding carriers (35a, 35b) comprises a contacting surface (41) resting on a lateral portion of respectively the first and second supporting layers (18a, 18b).

5. The stator (10) according to any preceding claim, wherein said projecting mating part (40) of each of said first and second winding carriers (35a, 35b) is a T-shaped mating part fitted inside a corresponding T-shaped opening (20) (40) of a plurality of T-shaped openings arranged on said first and a second coil locking layer (19a, 19b).

6. The stator (10) according to any preceding claim, wherein the core is a cylindrical core (12) having teeth (14) extending radially and inwardly from an inner surface of the cylindrical core, and wherein the first and a second coil locking layers are annular coil locking layers (19a, 19b) fixedly mounted on respective upper and lower annular surfaces (12a, 12b) of said core.

7. Electric rotary motor comprising the stator according to claim 6 and a rotor rotatably mounted on said stator.

8. Method for assembling a stator of a rotary electric motor, comprising the steps of:
- providing a cylindrical core (12) having an upper and a lower annular surface (12a, 12b) and comprising teeth (14) extending radially and inwardly from an inner surface of the cylindrical core (12), and forming slots (16) therebetween,
- fixedly mounting a first supporting ring (18a) on the upper surface (12a) of the core (12) and a second supporting ring (18b) on the lower surface (12b) of the core (12),
- providing a plurality of preformed coil assemblies (30) having each a winding section (32) comprising an elongated opening (34), and a first and a second winding carriers (35a, 35b) connected to respective opposite ends of the winding section (32), said first and second winding carriers (35a, 35b) comprising each a projecting mating part (20) having a contacting surface (41),
- fitting the elongated opening (34) of the winding section (32) of each preformed coil assembly (30) around a corresponding tooth (14) of the cylindrical core (12) such that the contacting surface (41) of the projecting mating part (40) of the first winding carrier (35a) of each preformed coil assembly (30) rests against the fist supporting ring (18a), while the contacting surface (41) of the projecting mating part (40) of the second winding carrier (35b) of each preformed coil assembly (30) rests against the second supporting ring (18b), and
- fixedly mounting a first coil locking ring (19a) against the first supporting ring (18a) and a second locking ring (18b) against the second supporting ring (18b), wherein said first and second coil locking rings (19a, 19b) comprise each a corresponding plurality of openings (20) of complementary mating shape, thereby surrounding each projecting mating part (20) of respective first and second winding carriers (35a, 35b) of each of said plurality of preformed coil assemblies (30) in order to obtain the stator.

## Patentansprüche

1. Ein Stator (10) für Elektromotoren, umfassend
einen Kern (12) mit einer oberen und einer unteren Fläche (12a, 12b) und mit Zähnen (14) und dazwischen ausgebildeten Schlitzen (16), und
eine Vielzahl von vorgeformten Spulenanordnungen (30), die auf einem jeweiligen Zahn (14) des Kerns (12) angebracht sind, wobei jede vorgeformte Spulenanordnung (30) einen Wicklungsabschnitt (32) mit einer länglichen Öffnung (34), die so konfiguriert ist, dass sie um den entsprechenden Zahn (14) herum eingestellt werden kann, und einen ersten und einen zweiten Wicklungsträger (35a, 35b), die mit den jeweiligen gegenüberliegenden Enden des Wicklungsabschnitts (32) verbunden sind,
**dadurch gekennzeichnet,**
**dass** der Stator ferner eine erste und eine zweite Spulenverriegelungsschicht (19a, 19b) umfasst, die fest an der oberen bzw. unteren Fläche (12a, 12b) des Kerns (12) angebracht sind, wobei der erste und der zweite Wicklungsträger (35a, 35b) jeder der mehreren vorgeformten Spulenanordnungen (30) jeweils ein vorstehendes Gegenstück (40) umfassen, während die erste und die zweite Spulenverriegelungsschicht (19a, 19b) jeweils eine entsprechende Vielzahl von komplementär geformten Eingriffsöffnungen (40) aufweisen, in die das vorstehende Gegenstück (40) des jeweiligen ersten und zweiten Wicklungsträgers (35a, 35b) einer der Vielzahl von vorgeformten Spulenanordnungen (30) eingepasst ist,
wobei der Stator (10) ferner eine erste Stützschicht (18a), die zwischen der oberen Fläche (12a) des Kerns (12) und der ersten Spulenverriegelungsschicht (19a) angebracht ist, und eine zweite Stützschicht (18b), die zwischen der unteren Fläche (12b) des Kerns (12) und der zweiten Spulenverriegelungsschicht (19b) angebracht ist, umfasst.

2. Der Stator (10) nach Anspruch 1, wobei jeder der ersten und zweiten Wicklungsträger (35a, 35b) einen Wicklungsabschnitt (36) mit einer Kontaktfläche (37) aufweist, die an einer entsprechenden Fläche der jeweiligen ersten und zweiten Stützschicht (18a, 18b) anliegt.

3. Der Stator (10) nach Anspruch 2, wobei jeder der ersten und zweiten Wicklungsträger (35a, 35b) ferner vorstehende Wände (38) aufweist, die sich auf beiden Seiten der Kontaktfläche (37) erstrecken.

4. Der Stator (10) nach Anspruch 2 oder 3, wobei das vorstehende Gegenstück (40) des ersten und zweiten Wicklungsträgers (35a, 35b) eine Kontaktfläche (41) aufweist, die auf einem seitlichen Abschnitt der ersten beziehungsweise der zweiten Stützschicht (18a, 18b) aufliegt.

5. Der Stator (10) nach einem der vorhergehenden Ansprüche, wobei das vorstehende Gegenstück (40) jedes der ersten und zweiten Wicklungsträger (35a, 35b) ein T-förmiges Gegenstück ist, das in eine entsprechende T-förmige Öffnung (20) einer Vielzahl von T-förmigen Öffnungen eingepasst ist, die an der ersten und zweiten Spulenverriegelungsschicht (19a, 19b) angeordnet sind.

6. Der Stator (10) nach einem der vorhergehenden Ansprüche, wobei der Kern ein zylindrischer Kern (20) mit Zähnen (14) ist, die sich von einer Innenfläche des zylindrischen Kerns radial und nach innen erstrecken, und wobei die erste und die zweite Spulenverriegelungsschicht ringförmige Spulenverriegelungsschichten (19a, 19b) sind, die fest an der oberen bzw. unteren ringförmigen Fläche (12a, 12b) des Kerns angebracht sind.

7. Ein Elektrischer Rotationsmotor mit dem Stator nach Anspruch 6 und einem drehbar auf dem Stator montierten Rotor.

8. Ein Verfahren zum Zusammenbau eines Stators eines elektrischen Rotationsmotors, die folgenden Schritte umfassend:
- Bereitstellen eines zylindrischen Kerns (12) mit einer oberen und einer unteren Ringfläche (12a, 12b) und mit Zähnen (14), die sich von einer Innenfläche des zylindrischen Kerns (12) radial nach innen erstrecken und Schlitze (16) zwischen den Zähnen bilden,
- festes Anbringen eines ersten Stützrings (18a) an der oberen Fläche (12a) des Kerns (12) und eines zweiten Stützrings (18b) an der unteren Fläche (12b) des Kerns (12),
- Bereitstellen einer Vielzahl von vorgeformten Spulenanordnungen (30) mit jeweils einem Wickelabschnitt (32), der eine längliche Öffnung (34) aufweist, und einem ersten und einem zweiten Wicklungsträger (35a, 35b), die mit jeweiligen gegenüberliegenden Enden des Wickelabschnitts (32) verbunden sind, wobei der erste und der zweite Wicklungsträger (35a, 35b) jeweils ein vorstehendes Gegenstück (40) mit einer Kontaktfläche (41) aufweisen,
- Einpassen der länglichen Öffnung (34) des Wickelabschnitts (32) jeder vorgeformten Spulenanordnung (30) um einen entsprechenden Zahn (14) des zylindrischen Kerns (12), so dass die Kontaktfläche (41) des vorstehenden Gegenstücks (40) des ersten Wicklungsträgers (35a) jeder vorgeformten Spulenanordnung (30) an dem ersten Stützring (18a) anliegt, während die Kontaktfläche (41) des vorstehenden Gegenstücks (40) des zweiten Wicklungsträgers (35b) jeder vorgeformten Spulenanordnung (30) an dem zweiten Stützring (18b) anliegt, und
- festes Montieren eines ersten Spulenverriegelungsrings (19a) gegen den ersten Stützring (18a) und eines zweiten Spulenverriegelungsrings (18b) gegen den zweiten Stützring (18b), wobei der erste und der zweite Spulenverriegelungsring (19a, 19b) jeweils eine entsprechende Vielzahl von Öffnungen (20) mit komplementärer Eingriffsform aufweisen, wodurch jeder vorstehende Gegenstück (40) der jeweiligen ersten und zweiten Wicklungsträger (35a, 35b) jeder der Vielzahl von vorgeformten Spulenanordnungen (30) umgeben wird, um den Stator zu erhalten.

## Revendications

1. Un stator (10) pour moteurs électriques, comprenant
un noyau (12) ayant une surface supérieure et une surface inférieure (12a, 12b) et comprenant des dents (14) formant des fentes (16) entre elles, et
une pluralité d'ensembles de bobines préformées (30) montées sur les dents respectives (14) dudit noyau (12), chaque ensemble de bobine préformée (30) comprenant une section d'enroulement (32) comprenant une ouverture allongée (34) configurée pour être ajustée autour de la dent correspondante (14), et un premier et un second support d'enroulement (35a, 35b) connectés aux extrémités opposées respectives de la section d'enroulement (32),
**caractérisé en ce que** le stator comprend en outre une première et une seconde couche de verrouillage de bobine (19a, 19b) montées de manière fixe sur les surfaces supérieure et inférieure respectives (12a, 12b) dudit noyau (12), lesdits premier et second supports d'enroulement (35a, 35b) de chacun de ladite pluralité d'ensembles de bobines préformées (30) comprenant chacun une partie d'accouplement en saillie (40) tandis que lesdites première et seconde couches de verrouillage de bobine (19a, 19b) comprennent chacune une pluralité correspondante d'ouvertures d'accouplement (20) de forme complémentaire à l'intérieur desquelles sont montées les parties d'accouplement en saillie (40) des premier et second supports d'enroulement respectifs (35a, 35b) de l'un de ladite pluralité d'ensembles de bobines préformées (30), le stator (10) comprenant en outre une première couche de support (18a) montée entre la surface supérieure (12a) du noyau (12) et la première couche de verrouillage de bobine (19a), et une seconde couche de support (18b) montée entre la surface inférieure (12b) du noyau (12) et la deuxième couche de verrouillage de bobine (19b).

2. Le stator (10) selon la revendication 1, dans lequel chacun des premiers et seconds supports d'enroulement (35a, 35b) comprend une portion d'enroulement (36) ayant une surface de contact (37) reposant sur une surface correspondante des première et seconde couches de support respectives (18a, 18b).

3. Le stator (10) selon la revendication 2, dans lequel chacun des premier et second supports d'enroulement (35a, 35b) comprend en outre des parois en saillie (38) s'étendant des deux côtés de la surface de contact (37).

4. Le stator (10) selon la revendication 2 ou 3, dans lequel la partie d'accouplement en saillie (40) des premier et second supports d'enroulement (35a, 35b) comprend une surface de contact (41) reposant sur une portion latérale des premier et second supports d'enroulement (18a, 18b).

5. Le stator (10) selon l'une des revendications précédentes, dans lequel la partie d'accouplement en saillie (40) de chacun des premier et second supports d'enroulement (35a, 35b) est une partie d'accouplement en forme de T insérée à l'intérieur d'une ouverture (20) en forme de T correspondante d'une pluralité d'ouvertures en forme de T disposées sur les première et seconde couches de verrouillage de bobine (19a, 19b).

6. Le stator (10) selon l'une des revendications précédentes, dans lequel le noyau est un noyau cylindrique (12) ayant des dents (14) s'étendant radialement et vers l'intérieur à partir d'une surface intérieure du noyau cylindrique, et dans lequel les première et seconde couches de verrouillage de bobine sont des couches annulaires de verrouillage de bobine (19a, 19b) montées de manière fixe sur les surfaces annulaires supérieures et inférieures (12a, 12b) dudit noyau.

7. Moteur électrique rotatif comprenant le stator selon la revendication 6 et un rotor monté rotatif au stator.

8. Méthode d'assemblage d'un stator d'un moteur électrique rotatif, comprenant les étapes suivantes :
- fournir un noyau cylindrique (12) ayant une surface annulaire supérieure et inférieure (12a, 12b) et comprenant des dents (14) s'étendant radialement et vers l'intérieur à partir d'une surface intérieure du noyau cylindrique (12), et formant des fentes (16) entre elles,
- monter de manière fixe un premier anneau de support (18a) sur la surface supérieure (12a) du noyau (12) et un second anneau de support (18b) sur la surface inférieure (12b) du noyau (12),
- fournir une pluralité d'ensembles de bobines préformées (30) ayant chacun une section d'enroulement (32) comprenant une ouverture allongée (34), et un premier et un second support d'enroulement (35a, 35b) connectés aux extrémités opposées respectives de la section d'enroulement (32), lesdits premier et second supports d'enroulement (35a, 35b) comprenant chacun une partie d'accouplement en saillie (20) ayant une surface de contact (41),
- ajuster l'ouverture allongée (34) de la section d'enroulement (32) de chaque ensemble de bobine préformée (30) autour d'une dent correspondante (14) du noyau cylindrique (12) de telle sorte que la surface de contact (41) de la partie d'accouplement en saillie (40) du premier support d'enroulement (35a) de chaque ensemble de bobine préformée (30) repose contre le premier anneau de support (18a), tandis que la surface de contact (41) de la partie d'accouplement en saillie (40) du second support d'enroulement (35b) de chaque ensemble de bobine préformée (30) repose sur le second anneau de support (18b), et
- monter de manière fixe un premier anneau de verrouillage de bobine (19a) contre le premier anneau de support (18a) et un second anneau de verrouillage (18b) contre le second anneau de support (18b), dans lequel lesdits premier et second anneaux de verrouillage de bobine (19a, 19b) comprennent chacun une pluralité correspondante d'ouvertures d'accouplement (20) de forme complémentaire, entourant ainsi chaque partie d'accouplement en saillie (20) des premier et second supports d'enroulement respectifs (35a, 35b) de chacun de ladite pluralité d'ensembles de bobines préformées (30) afin d'obtenir le stator
